Europäisches Patentamt

European Patent Office

Office européen des brevets

(11) Numéro de publication: **0 336 860**
**A1**

## (12) DEMANDE DE BREVET EUROPEEN

(21) Numéro de dépôt: 89420116.9

(51) Int. Cl.4: **H 04 M 1/58**

(22) Date de dépôt: 30.03.89

(30) Priorité: 01.04.88 FR 8804733

(43) Date de publication de la demande:
11.10.89 Bulletin 89/41

(84) Etats contractants désignés:
AT BE CH DE ES FR GB GR IT LI LU NL SE

(71) Demandeur: **HORLOGERIE PHOTOGRAPHIQUE FRANCAISE (société anonyme)**
**Avenue de Savoie**
**F-74130 Bonneville (FR)**

(72) Inventeur: **Cognasse, Christian**
**Les Vorziers, Dessy II**
**F-74130 Bonneville (FR)**

**Graham, Peter**
**Immeuble Le Salève A. Avenue Mozart**
**F-74130 Bonneville (FR)**

**Maury, Bernard**
**Sous-Pouilly Contamine sur Arve**
**F-74130 Bonneville (FR)**

**Walter, Jean-Claude**
**Sous Lavy Faucigny**
**F-74130 Bonneville (FR)**

(74) Mandataire: **de Beaumont, Michel**
**Cabinet Poncet 7, chemin de Tillier B.P. 317**
**F-74008 Annecy Cédex (FR)**

(54) Capsule électroacoustique à bobine rapportée.

(57) Selon l'invention, la capsule (1) forme un ensemble indépendant d'un corps de bobine (15). Le transducteur électroacoustique comprend une capsule (1) composée d'un boitier avec une membrane vibrante (2) et ses connecteurs (4, 5) électriques, et un corps de bobine (15) distinct et séparable de la capsule. Le corps de bobine est adaptable sur la face postérieure (14) de la capsule, et comprend des passages axiaux (20, 21) traversés par les connecteurs (4, 5) de capsule. Des pièces de contact (22, 23) assurent la connexion électrique de la bobine sur les connecteurs de capsule.

Fig.1

EP 0 336 860 A1

**Description**

## CAPSULE ELECTROACOUSTIQUE A BOBINE RAPPORTEE

La présente invention concerne les capsules réceptrices téléphoniques, comprenant généralement un boitier renfermant un élément vibrant pour transformer en vibrations sonores les signaux électriques acheminés sur ses bornes d'entrée par une ligne d'alimentation.

Dans les transducteurs actuellement utilisés pour la réception en téléphonie, l'élément vibrant est consitué d'une membrane maintenue sur son pourtour dans un boitier de capsule. Le boitier comprend un corps de base muni d'une cavité centrale dont la périphérie forme surface d'appui pour la périphérie de la membrane vibrante ; le boitier comprend en outre un couvercle se raccordant par sa périphérie au corps de base, et comportant un évidement intérieur communiquant avec l'extérieur par au moins un orifice ; la périphérie du couvercle comporte un relief annulaire intérieur en appui sur la périphérie de membrane pour la maintenir plaquée contre la périphérie de cavité du corps de base.

La cavité centrale du corps de base définit, avec la membrane vibrante, une cavité intérieure de base. L'évidement intérieur de couvercle définit, avec la membrane vibrante, une cavité intérieure de couvercle. La forme et les dimensions des cavités intérieures de base et de couvercle contribuent sensiblement à la détermination des qualités acoustiques de la capsule.

Par ailleurs, les prothèses auditives pour malentendants sont conçues pour amplifier les vibrations acoustiques reçues et les rendre perceptibles par l'oreille. Toutefois, certaines prothèses comportent un dispositif de réglage qui, en position "T", les rend aptes à capter un champ magnétique. Ces prothèses permettent ainsi de fonctionner correctement lorsque le transducteur est de type électromagnétique.

Par contre, le champ magnétique rayonné par la bobine d'un capteur électrodynamique est limité, voire insuffisant pour assurer le fonctionnement correct d'une prothèse auditive. Cet inconvénient est encore plus sensible avec des capteurs piézoélectriques, de tels capteurs ne produisant aucun champ magnétique susceptible de solliciter les prothèses sensibles au champ magnétique.

Pour résoudre cet inconvénient, on a imaginé des capsules réceptrices téléphoniques comportant des bobines auxiliaires, alimentées par le signal électrique de commande de la membrane vibrante, et produisant un champ magnétique auxiliaire susceptible d'être capté par des prothèses auditives.

Une telle solution est décrite par exemple dans le brevet FR-A-2 571 581 au nom de la demanderesse. La solution décrite dans ce brevet nécessite toutefois de prévoir des capsules particulières, comprenant simultanément les organes vibrants habituels d'une capsule et les organes de production du champ magnétique. Ainsi, si l'on veut qu'un poste téléphonique soit rendu compatible avec les prothèses auditives sensibles au champ magnétique, il est nécessaire de changer totalement la capsule électroacoustique, pour adapter une capsule décrite dans ce brevet.

Le document DE-U-8 715 846 décrit une capsule piézoélectrique sur laquelle peut se rapporter un corps de bobine formant un ensemble distinct de la capsule. Le corps de bobine présente une forme annulaire qui s'adapte sur une partie cylindrique du boitier de capsule. Le corps de bobine comprend des logements dans lesquels sont disposés des connecteurs de bobine, formant les extrémités de l'enroulement de bobine. Lorsque l'on engage le corps de bobine sur le boitier de capsule, les connecteurs de capsule pénètrent progressivement à l'intérieur des logements du corps de bobine. En fin d'engagement, les connecteurs de capsule sont entièrement disposés à l'intérieur des logements du corps de bobine, et viennent à proximité des connecteurs de bobine. Des cosses élastiques rapportées assurent l'assemblage et la connexion entre les connecteurs de capsule et les connecteurs de bobine. Ainsi, dans ce document, l'adjonction de la bobine et sa connexion nécessitent de prévoir des cosses élastiques rapportées, qui constituent des pièces supplémentaires. Etant donné la faible dimension des logements, l'adaptation est relativement malaisée, et complique le montage. D'autre part, le mode d'accouplement de la bobine sur le corps de capsule impose une forme géométrique particulière à la capsule réceptrice. Il en résulte qu'une famille de capsules de différents diamètres nécessite de prévoir une famille correspondante de bobines de différents diamètres. Le type de connexion, assuré par une pièce supplémentaire, introduit des impédances de contact dans le circuit électrique principal de la capsule, et risque de perturber son fonctionnement par suite de l'adaptation d'une bobine.

La présente invention a notamment pour objet d'éviter les inconvénients des solutions connues, en proposant une nouvelle structure de capsule, structure qui est modulaire et comprend deux parties principales connectables l'une à l'autre : une structure de capsule, avec les éléments vibrants traditionnels et ses moyens de connexion électrique ; une structure séparée comprenant la bobine de production du champ magnétique auxiliaire, avec ses moyens de connexion électrique. La structure est conçue de telle manière qu'il est possible de modifier les capsules existantes en leur adaptant le module comprenant la bobine magnétique auxiliaire.

En outre, l'invention permet une adaptation très facile du module comprenant la bobine auxiliaire, l'adaptation s'effectuant par simple adjonction, par exemple par encliquetage, sans nécessiter d'outils particuliers ou de pièces de connexion supplémentaire, et la connexion électrique étant assurée automatiquement lors de l'encliquetage sans nécessiter d'opération supplémentaire.

Il en résulte qu'un stock de capsules traditionnelles peut être aisément transformé en un stock de capsules à bobines auxiliaires pour malentendants.

Un autre objet de l'invention est d'assurer des connexions électriques particulières permettant d'assurer un fonctionnement correct de la capsule même dans le cas où la bobine devient défectueuse, par exemple dans le cas où le fil de bobine est coupé. D'autre part, l'adaptation du module comprenant la bobine magnétique auxiliaire n'introduit aucune impédance parasite de contact en série dans le circuit principal d'alimentation de la capsule elle-même.

Cette indépendance entre le circuit électrique de capsule et le circuit électrique de bobine facilite considérablement les tests qui sont effectués en fin de chaîne de fabrication, pour une production en série. En effet, on peut effectuer simultanément un test de fonctionnement pour le rayonnement magnétique de la bobine, et un test de fonctionnement pour le rayonnement acoustique de la capsule. Les deux circuits électriques étant indépendants, le résultat des tests est indépendant, et le non-fonctionnement éventuel de l'un des deux composants n'a pas d'incidence sur la fiabilité du test relatif à l'autre composant. On détermine ainsi, par un test unique, et de manière certaine, lequel des deux composants est éventuellement défectueux.

D'autre part, et grâce à la structure selon l'invention, l'adjonction d'une bobine sur une capsule ne nécessite pas de reconcevoir les moyens d'interconnexion de la capsule proprement dite, car ceux-ci demeurent inchangés.

Egalement, le mode d'accouplement particulier selon l'invention, entre une bobine et une capsule, n'impose pas de forme géométrique particulière à la capsule réceptrice. Il en résulte que l'on peut concevoir, pour une famille de capsules de différents diamètres, une même bobine adaptable sur toutes les capsules de la famille.

Pour atteindre ces objets ainsi que d'autres, le corps de bobine selon l'invention forme un ensemble distinct du corps de capsule. Le boitier de capsule comprend une face postérieure pourvue de moyens pour l'adaptation du corps de bobine, et le corps de bobine comprend une face antérieure munie de moyens de solidarisation sur la face postérieure de boitier de capsule. Le corps de bobine comprend deux passages axiaux dans lesquels pénètrent des connecteurs axiaux de capsule. Des conducteurs élastiques, disposés dans les passages axiaux du corps de bobine et connectés électriquement à l'enroulement de bobine, restent en appui élastique sur les connecteurs de capsule lorsque le corps de bobine est adapté sur la face postérieure du boitier de capsule. Les connecteurs axiaux de capsule ont une longueur supérieure à l'épaisseur du corps de bobine, de sorte que leurs extrémités dépassent de la face postérieure du corps de bobine et restent accessibles pour la connexion électrique de l'ensemble lorsque le corps de bobine est adapté sur la face postérieure du boitier de capsule.

Selon un mode de réalisation, les conducteurs élastiques du corps de bobine sont des lames ressorts arc-boutées sur les connecteurs de bobine.

Les moyens de solidarisation du corps de bobine sur la face postérieure de capsule comprennent avantageusement des picots à section carrée dépassant de la face antérieure du corps de bobine et s'insèrant dans des logements cylindriques de la face postérieure de capsule.

La structure particulière de raccordement entre la bobine et le corps de capsule permet toute liberté pour la constitution du corps de bobine lui-même, et permet d'y intégrer par exemple une résistance en série avec la bobine. Cette résistance limite le courant circulant dans la bobine, ce qui favorise l'adaptation d'impédance. En effet, une bobine seule montée en parallèle court-circuiterait pratiquement les bornes de sortie de l'étage final devant alimenter le transducteur.

Selon un mode de réalisation, le corps de bobine forme une cavité ouverte vers l'avant, et communiquant vers l'intérieur de la capsule par un filtre. Selon une solution, le corps de bobine est fermé vers l'arrière, et est muni de moyens d'étanchéité, formant ainsi une troisième cavité acoustique.

En alternative, le corps de bobine est ouvert vers l'arrière.

D'autres objets, caractéristiques et avantages de la présente invention ressortiront de la description suivante de modes de réalisation particuliers, faite en relation avec les figures jointes, parmi lesquelles :
- la figure 1 est une vue de côté en coupe A-A d'un ensemble selon la présente invention, la capsule et le corps de bobine étant en position assemblée ;
- la figure 2 représente l'ensemble de la figure 1 dans une position dans laquelle le corps de bobine est séparé de la capsule ;
- la figure 3 représente la face d'assemblage du corps de bobine selon la présente invention ;
- la figure 4 représente la face arrière du corps de bobine ;
- la figure 5 est une vue de détail en coupe B-B de la figure 4 ; et
- la figure 6 illustre le schéma de raccordement électrique selon l'invention.

Dans le mode de réalisation représenté sur les figures, la capsule 1 selon la présente invention comprend un élément vibrant en forme de membrane 2. On peut par exemple utiliser une membrane piézoélectrique de type connu, composée d'un film mince métallique ou isolant, formant le substrat de base de la membrane, et sur lequel est solidarisée au moins une couche de céramique piézoélectrique dont les faces sont métallisées et constituent des électrodes. Des moyens de connexion électrique 3, par exemple de type connu tel que des languettes métalliques élastiques, assurent la connexion des électrodes jusqu'à des connecteurs de sortie 4 et 5. Les connecteurs de sortie 4 et 5 sont des languettes métalliques, sensiblement rectangulaires planes, disposées selon deux directions axiales parallèles sensiblement perpendiculaires au plan général de la membrane 2. La membrane 2, par exemple de forme sensiblement circulaire, est maintenue sur son pourtour dans un boitier de capsule.

Le boitier comprend un corps de base 6, muni d'une cavité centrale 7, dont la périphérie forme surface d'appui 8 pour la périphérie de membrane. La surface d'appui 8 est avantageusement constituée par un relief annulaire rigide, sur lequel vient reposer le bord de la membrane 1.

Le boitier comprend en outre un couvercle 9, se raccordant par sa périphérie 10 au corps de base 6. Le couvercle 9 comprend un évidement intérieur 11 communiquant avec l'extérieur par une série d'orifices tels que l'orifice 12, régulièrement répartis dans la paroi du couvercle comme le représentent les figures. L'évidement 11 de couvercle définit une cavité acoustique de couvercle ; la cavité centrale 7 de corps de base définit une cavité acoustique de corps de base ; les cavités acoustiques sont séparées l'une de l'autre par la membrane 2. Un joint élastique périphérique annulaire 13, inséré entre la membrane 2 et le couvercle 9, est plaqué en appui sur la périphérie de membrane.

Le corps de base 6 comprend de manière connue des passages pour l'introduction et le maintien des connecteurs 4 et 5 qui y sont fixés.

La face postérieure 14 de la capsule 1 comprend des moyens pour l'adaptation d'un corps de bobine 15. Dans le mode de réalisation représenté, la face postérieure 14 est généralement plane, et les moyens d'adaptation sont des trous à section circulaire tels que le trou 16, répartis sur le pourtour de la face postérieure 14 de capsule, les trous étant destinés à recevoir des picots tels que le picot 17 de la face antérieure du corps de bobine 15.

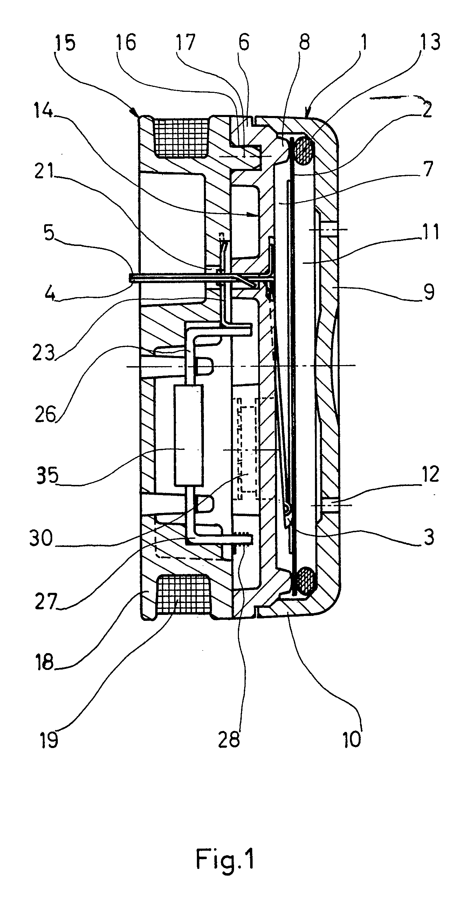

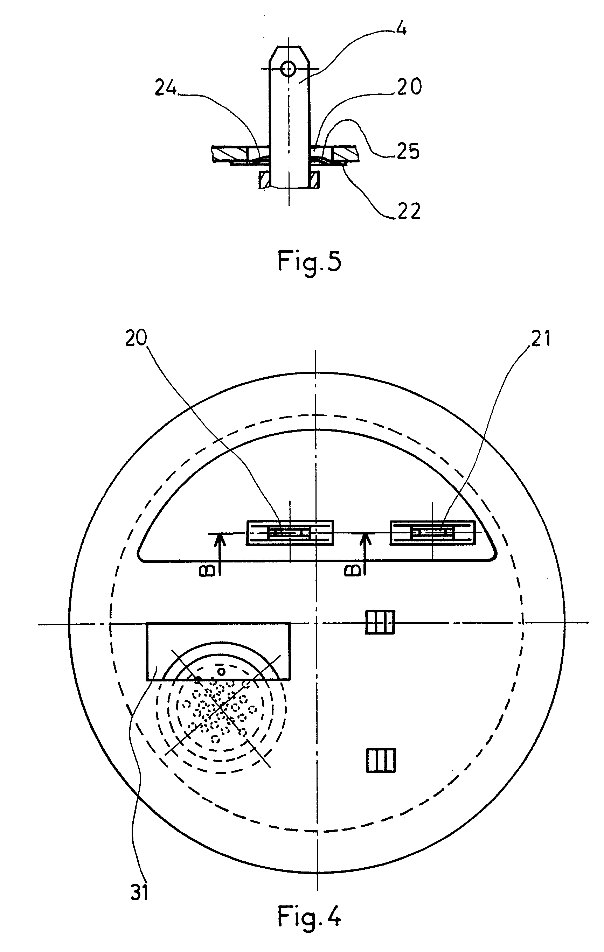

Le corps de bobine 15 comprend une structure formant armature de bobine 18, sur laquelle est bobiné le fil électrique formant l'enroulement 19 de bobine. Le corps de bobine comprend deux passages axiaux 20 et 21, disposés de façon que, lorsque le corps de bobine 15 est adapté contre la face postérieure du corps de base 6 de la capsule 1, les connecteurs 4 et 5 de la capsule traversent les passages 20 et 21. Le corps de bobine 15 a une épaisseur légèrement inférieure à la longueur des connecteurs 4 et 5, de sorte que les extrémités des connecteurs 4 et 5 dépassent légèrement de la face postérieure du corps de bobine 15 lorsque le corps de bobine est adapté sur la capsule, comme le représente la figure 1. Chacun des passages axiaux 20 et 21 est muni de moyens de connexion électrique de bobine constitués par des plaques de connexion métalliques respectivement 22 et 23, maintenues en position dans le corps de bobine 15 par des moyens d'accrochage, et comportant des passages pour les connecteurs 4 et 5. Les plaques de connexion 22 et 23 comprennent des découpes formant languettes, par exemple les languettes 24 et 25 de la plaque 22. Comme le représente en coupe la figure 5, les languettes 24 et 25 sont en appui sur les deux bords du connecteur correspondant 4 de la capsule. Lors de l'introduction du connecteur dans le passage 20, le connecteur 4 repousse les languettes 24 et 25 et les écarte légèrement ; il en résulte que les languettes s'arc-boutent sur les bords du connecteur 4, et qu'elles assurent un contact électrique de bonne qualité, tout en interdisant ou en freinant considérablement le retrait éventuel du connecteur hors du passage 20. De cette façon, les plaques 22 et 23 assurent à la fois les fonctions de connexion électrique et de moyen anti-retour empêchant le démontage.

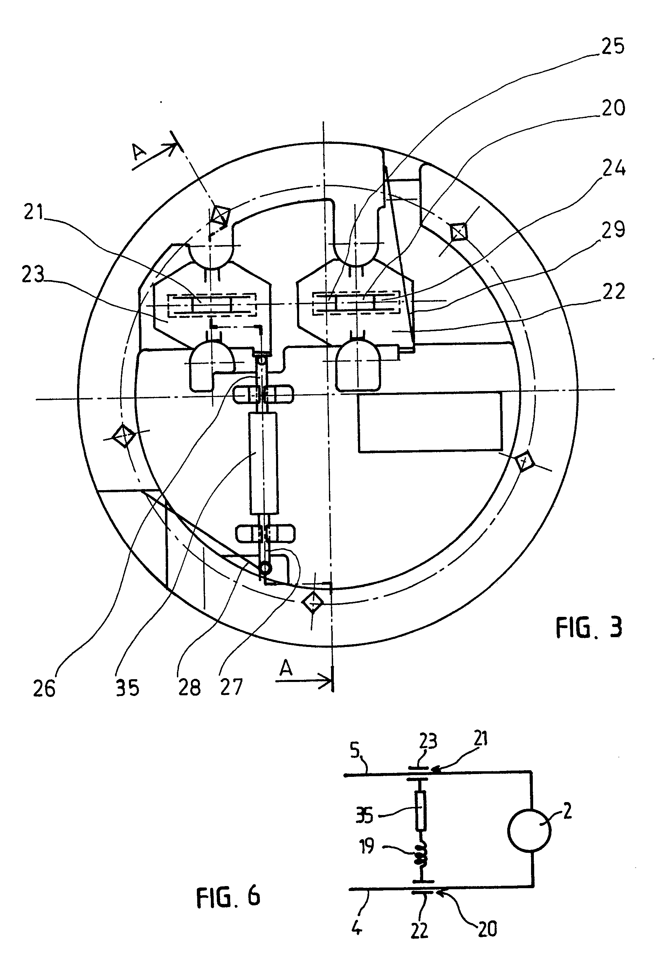

Dans le mode de réalisation représenté sur les figures, le corps de bobine porte en outre une résistance électrique 35, dont une première borne 26 est soudée à la plaque de connexion 23, et dont la seconde borne 27 reçoit l'extrémité 28 du fil électrique d'enroulement 19 de bobine. L'autre extrémité 29 du fil d'enroulement de bobine est raccordée électriquement à la seconde plaque de connexion 22, comme le représente la figure 3.

La face antérieure du corps de bobine 15 est généralement plane, pour se conformer à la face postérieure 14 du corps de capsule, et comprend des picots tels que le picot 17, de préférence à section carrée. La section des picots 17 est adaptée pour s'engager en force dans des trous à section ronde correspondants tels que le trou 16 de la capsule 1.

En alternative, on peut utiliser des picots 17 à section différente, par exemple circulaire, qui viennent se loger dans des trous 16 à section différente, par exemple carrée de la capsule.

Il semble plus avantageux de prévoir les trous dans la capsule et les picots sur le corps de bobine 15 ; on réalise ainsi une capsule qui est utilisable avec ou sans corps de bobine 15, sans augmentation de son épaisseur. La solution alternative qui consiste à prévoir des picots sur la face postérieure 14 du corps de capsule, et des trous dans le corps de bobine 15, est également possible selon la présente invention. Cette solution conduit toutefois à augmenter légèrement l'épaisseur de la capsule 1 lorsque l'on n'utilise pas de corps de bobine 15 ; il faut en outre augmenter légèrement l'épaisseur du corps de bobine 15 pour loger les trous.

Dans le mode de réalisation représenté sur les figures, le corps de bobine 15 forme une cavité ouverte vers l'avant, et communiquant avec l'intérieur de la capsule par l'intermédiaire d'un filtre 30. La cavité du corps de bobine est également ouverte vers l'arrière, par des ouvertures telles que l'ouverture 31.

Dans certains cas, on peut avoir avantage à utiliser un corps de bobine dans lequel la cavité interne est fermée vers l'arrière, le fond du corps de bobine étant étanche. On réalise ainsi une troisième cavité, produisant une contre-réaction acoustique, de sorte que les qualités de la capsule et du corps de bobine 15 ne dépendent plus des éléments éventuellement disposés en arrière du corps de bobine 15.

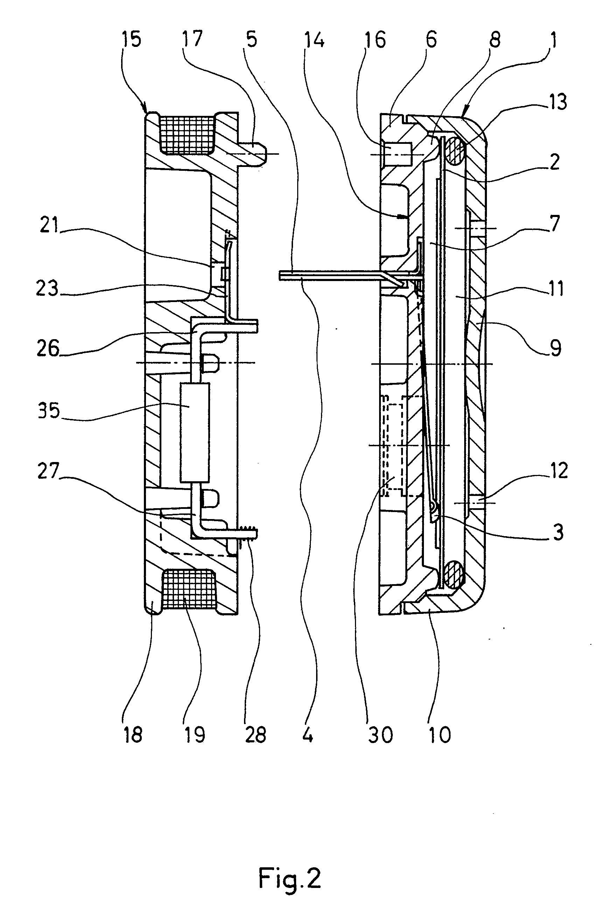

Le fonctionnement du dispositif est le suivant : partant d'une position désassemblée représentée sur la figure 2, dans laquelle la capsule 1 et le corps de bobine 15 sont deux éléments distincts et séparés, on rapproche le corps de bobine 15 de la capsule 1, la face antérieure du corps de bobine 15 étant disposée vers la face postérieure 14 de la capsule. On engage les connecteurs 4 et 5 dans les passages correspondants 20 et 21 ; les connecteurs 4 et 5 repoussent les languettes correspondantes telles que les languettes 24 et 25, et les picots 17 s'engagent progressivement dans les trous 16 correspondants. En pressant l'un contre l'autre la capsule 1 et le corps de bobine 15, on engage totalement les picots 17 dans les trous 16. La connexion électrique se trouve alors automatiquement assurée, par le fait que les connecteurs 4 et 5 sont en contact des plaques de connexion 20 et 21. La connexion électrique de l'ensemble s'effectue par les extrémités accessibles des connecteurs 4 et 5.

La figure 6 illustre le schéma de raccordement électrique des différents organes du transducteur selon l'invention en position d'assemblage représentée sur la figure 1. L'ensemble formé par la bobine 19 et la résistance 35 en série est connecté en parallèle sur la membrane 2 ; le circuit électrique principal de membrane 2, formé par la membrane et les connecteurs 4 et 5 n'est pas modifié par l'adjonction de l'ensemble formé par la bobine 19 et la résistance 35, les plaques 22 et 23 venant simplement frotter sur les connecteurs 4 et 5 tout en laissant leurs extrémités libres pour la connexion de l'ensemble à un circuit électrique extérieur.

La présente invention n'est pas limitée aux modes de réalisation qui ont été explicitement décrits, mais elle en inclut les diverses variantes et généralisations contenues dans le domaine des revendications ci-après.

## Revendications

1 - Transducteur électroacoustique, comprenant une capsule réceptrice téléphonique formée d'une membrane (2) transformant en vibrations sonores les signaux électriques acheminés sur des connecteurs d'entrée (4, 5) axiaux par une ligne d'alimentation, la membrane (2) étant insérée dans un boitier formé d'un corps de base (6) et d'un couvercle (9), le transducteur comprenant en outre un dispositif auxiliaire formé d'une bobine électrique, alimentée par les signaux électriques de la ligne d'alimentation, et produisant un champ magnétique auxiliaire modulé par ces signaux et susceptible d'être capté par une prothèse auditive de malentendant, la bobine étant contenue dans un corps de bobine (15) formant un ensemble distinct de la capsule (1) et pouvant être adapté et fixé sur le boîtier (6, 9) de capsule (1), le corps de bobine (15) comprenant deux passages axiaux (20, 21) dans lesquels pénètrent des connecteurs (4, 5) axiaux de capsule, caractérisé en ce que :
- le boîtier de capsule (6, 9) comprend une face postérieure (14) pourvue de moyens pour l'adaptation du corps de bobine (15),
- le corps de bobine (15) comprend des moyens (17) de solidarisation sur la face postérieure (14) de boîtier de capsule (1),
- des conducteurs élastiques (22, 23), disposés dans les passages axiaux (20, 21) du corps de bobine (15) et connectés électriquement à l'enroulement (19) de bobine, restent en appui élastique sur les connecteurs (4, 5) de capsule lorsque le corps de bobine (15) est adapté sur la face postérieure (14) du boîtier de capsule (1)
- les connecteurs (4, 5) axiaux de capsule ont une longueur supérieure à l'épaisseur du corps de bobine (15), de sorte que leurs extrémités dépassent de la face postérieure du corps de bobine (15) et restent accessibles pour la connexion électrique de l'ensemble lorsque le corps de bobine (15) est adapté sur la face postérieure (14) du boîtier de capsule (1).

2 - Transducteur selon la revendication 1, caractérisé en ce que les conducteurs élastiques (22, 23) sont des plaques de connexion (22, 23) comportant des languettes (24, 25) élastiques qui sont repoussées et écartées légèrement par le connecteur correspondant (4, 5) lors de son introduction, et qui s'arc-boutent sur le connecteur (4, 5) correspondant.

3 - Transducteur selon l'une des revendications 1 ou 2, caractérisé en ce que les moyens d'adaptation du corps de bobine (15) sur la capsule (1) comprennent des picots (17) prévus sur la face de raccordement de l'un des deux éléments constitués par le corps de bobine (15) et la capsule (1), les picots s'insérant en force dans des trous (16) à section correspondante de la face de raccordement opposée de l'autre des deux éléments.

4 - Transducteur selon la revendication 3, caractérisé en ce que les picots (17) ont une section circulaire et sont destinés à s'insérer en force dans des trous (16) à section carrée.

5 - Transducteur selon la revendication 3, caractérisé en ce que les picots (17) ont une section carrée, et sont destinés à s'engager en force dans des trous correspondants (16) à section circulaire.

6 - Transducteur selon l'une des revendications 4 ou 5, caractérisé en ce que les trous (16) sont ménagés sur la face postérieure (14) de capsule (1), et les picots (17) sont ménagés sur la face antérieure du corps de bobine (15).

7 - Transducteur selon l'une quelconque des revendications 1 à 6, caractérisé en ce que le corps de bobine (15) forme une cavité ouverte vers l'avant et communiquant vers l'intérieur de la capsule par un filtre (30).

8 - Transducteur selon la revendication 7, caractérisé en ce que le corps de bobine (15) est fermé vers l'arrière, et forme une troisième cavité acoustique.

9 - Transducteur selon la revendication 7, caractérisé en ce que le corps de bobine (15) est ouvert vers l'arrière.

10 - Transducteur selon l'une quelconque des revendications 1 à 9, caractérisé en ce que l'enroulement (19) de bobine est connecté en série avec une résistance électrique (35) entre les conducteurs élastiques (22, 23).

EP 0 336 860 A1

Fig.1

Fig.2

EP 0 336 860 A1

FIG. 3

FIG. 6

Fig.5

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-U-8 715 846 (SIEMENS AG)<br>* En entier *<br>--- | 1 | H 04 M 1/58 |
| A | DE-A-3 140 746 (FERNSPRECH- UND SIGNAL-BAU GESELLSCHAFT)<br>* En entier *<br>----- | 1 | |

**DOMAINES TECHNIQUES RECHERCHES (Int. Cl.4)**

H 04 R
H 04 M

Le présent rapport a été établi pour toutes les revendications

| Lieu de la recherche | Date d'achèvement de la recherche | Examinateur |
|---|---|---|
| LA HAYE | 23-05-1989 | MINNOYE G.W. |